# EUROPEAN PATENT APPLICATION

(11) **EP 3 285 169 A2**
(43) Date of publication of application: **21.02.2018**
(21) Application number: 17181438.7
(22) Date of filing: 14.07.2017
(51) Int. Cl.: G06F 11/32, G06F 11/34

(54) **SYSTEM STATUS VISUALIZATION METHOD AND SYSTEM STATUS VISUALIZATION DEVICE**

(30) Priority: 17.08.2016 JP 2016160149
(71) Applicant: Fujitsu Limited, Kawasaki-shi, Kanagawa 211-8588 (JP)
(72) Inventor: Suzuki, Shuji, Kanagawa, 211-8588 (JP); Kanemasa, Yasuhiko, Kanagawa, 211-8588 (JP)
(74) Representative: Hoffmann Eitle

(57) **Abstract**

From among the communication packets captured by a capturing unit (21), the communication packets of the applications for which the response time holds importance from the performance perspective are used by a response time calculating unit (26) to calculate the response time on an application-by-application basis. Then, a normalizing unit (28) calculates the average response time and normalizes the average response time using the representative response time to calculate the normalized response time on an application-by-application basis. Subsequently, a performance decrease determining unit (31) determines whether or not the performance of the concerned application has decreased. Regarding an application that has undergone a decrease in the performance, a diagnosing unit (33) determines whether or not the decrease is attributable to the application or attributable to the infrastructure of cloud computing.

## Description

### FIELD

The embodiment discussed herein is related to a system status visualization method and a system status visualization device.

### BACKGROUND

In a system that provides resources to clients, it is important to monitor the status of a provided resource and check whether there is no problem with the resource. For example, in a cloud system for providing a virtual machine, it is important to monitor a response time and the load of applications running on the virtual machine, and to check whether there is no problem with the performance of the applications.

Herein, a virtual machine represents a virtual computer that runs on a physical machine (computer). Moreover, a cloud system represents a system that provides computer hardware or computer software to the user via a network.

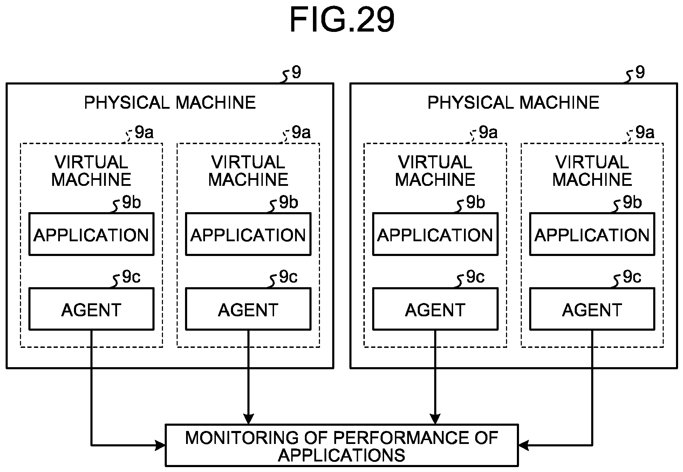

In order to collect data related to the performance of applications, agents are used. FIG. 29 is a diagram for explaining the monitoring performed by agents. As illustrated in FIG. 29, a virtual machine 9a runs on a physical machine 9, and an application 9b and an agent 9c are executed by the virtual machine 9a. The agent 9c collects the data related to the performance of the application 9b, and monitors the performance of the application 9b.

Meanwhile, as a technology for analyzing the status of a system, there is a technology in which the processing state of such transactions is analyzed which are made of messages specified in a protocol log matching with the calling relationship indicated by a transaction model, and the operating status of the system is accurately analyzed.

Moreover, a technology is known in which, using the time difference between the transmission timing of drawing processing data and the transmission timing of input operation data in a time window in which the state of occurrence of the input operation data and the state of occurrence of drawing processing data corresponding to the input operation data have a high degree of similarity, the response time of a remote desktop system is calculated.

Moreover, there is a technology in which, using the correlation between the chronological transition of the average processing time per processing by a server belonging to a first hierarchical level and the chronological transition of the average processing time per processing by a server belonging to a second hierarchical level, the possibility of propagation of the impact of processing times among a plurality of servers belonging to different hierarchical levels is analyzed.
[Patent Literature 1] Japanese Laid-open Patent Publication No. 2006-11683
[Patent Literature 2] Japanese Laid-open Patent Publication No. 2015-11653
[Patent Literature 3] Japanese Laid-open Patent Publication No. 2011-258057

In the monitoring of the performance as illustrated in FIG. 29, although the performance of each application can be monitored, it is not possible to identify whether a decrease in the performance of an application is attributable to the infrastructure of cloud computing or attributable to that application. Herein, the infrastructure of cloud computing represents an infrastructure in which the ICT infrastructure (ICT stands for Information and Communication Technology) of servers, networks, and storages is provided using virtualization technology. The infrastructure of cloud computing has the functions of virtual machine management, storage management, and network management.

Accordingly, it is an object in one aspect of an embodiment of the invention to identify whether a decrease in the performance of an application is attributable to the infrastructure of cloud computing or attributable to that application.

### SUMMARY

According to an aspect of an embodiment, a system status visualization program for causing a computer to execute a process including storing that, for each of a plurality of applications executed in a system, includes obtaining data passing through a predetermined point of the system and storing the data; calculating, on an application-by-application basis, average response time in each predetermined time window using the stored data; calculating normalized response time on an application-by-application basis by normalizing the calculated average response time; and outputting that includes determining status of the system according to magnitude of the normalized response time that is calculated, and outputting

### BRIEF DESCRIPTION OF DRAWINGS

FIG. 1 is a diagram illustrating a configuration of a cloud system according to an embodiment;
FIGS. 2A and 2B are diagrams illustrating an example of a type-determination-data storing unit;
FIG. 3 is a diagram illustrating an example of a type information storing unit;
FIG. 4 is a diagram for explaining a method for calculating the response time;
FIG. 5 is a diagram illustrating an example of a response-time-information storing unit;
FIG. 6 is a diagram for explaining normalization of the average response time;
FIG. 7 is a diagram illustrating an example of a representative information storing unit;
FIGS. 8A and 8B are diagrams for explaining the ex-Gaussian distribution;
FIG. 9 is a diagram for explaining an outlier;
FIG. 10 is a diagram illustrating an example of a normalization information storing unit;
FIG. 11 is a diagram for explaining the variability in the normalized average response time in the case in which the request count is low;
FIG. 12 is a diagram illustrating an example of a determination information storing unit;
FIG. 13 is a diagram illustrating an example of a cloud information storing unit;
FIG. 14 is a diagram illustrating an example of a visualization data storing unit;
FIG. 15 is a diagram illustrating an exemplary display of the performance statuses;
FIG. 16 is a diagram illustrating a display example in which the contrasting density of the colors is varied according to the request frequency;
FIG. 17 is a flowchart for explaining the flow of a packet capturing operation;
FIG. 18 is a flowchart for explaining the flow of an operation for diagnosing the performance status of the infrastructure of cloud computing;
FIG. 19 is a flowchart for explaining the flow of a type determination operation;
FIG. 20 is a flowchart for explaining the flow of a normalization operation;
FIG. 21 is a flowchart for explaining the flow of a performance decrease determination operation;
FIG. 22 is a flowchart for explaining the flow of a diagnosis operation;
FIG. 23 is a flowchart for explaining the flow of a visualization operation;
FIG. 24 is a flowchart for explaining the flow of a type determination operation performed using machine learning;
FIG. 25 is a flowchart for explaining the flow of an input calculation operation;
FIG. 26 is a flowchart for explaining the flow of an operation for building a learning machine;
FIG. 27 is a flowchart for explaining the flow of a normalization operation performed using the ex-Gaussian distribution;
FIG. 28 is a diagram illustrating a configuration of the computer that executes a performance status diagnosing program according to the embodiment; and
FIG. 29 is a diagram for explaining the monitoring performed by agents.

### DESCRIPTION OF EMBODIMENT(S)

Preferred embodiments of the present invention will be explained with reference to accompanying drawings. However, the technology disclosed herein is not limited by the embodiment.

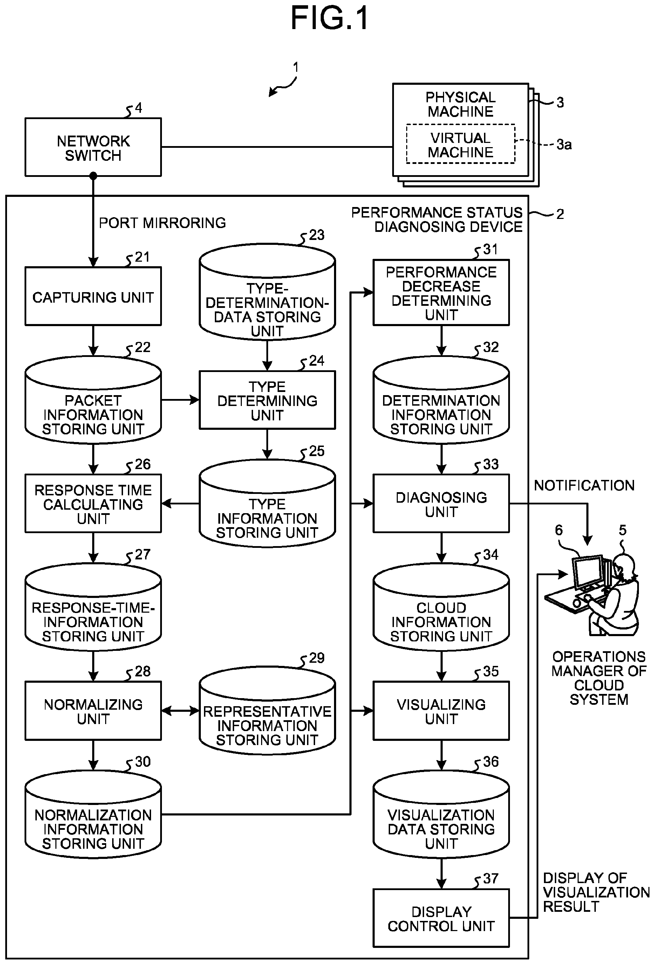

Firstly, the explanation is given about a configuration of a cloud system according to the embodiment. FIG. 1 is a diagram illustrating a configuration of the cloud system according to the embodiment. As illustrated in FIG. 1, a cloud system 1 according to the embodiment includes a performance status diagnosing device 2, an arbitrary number of physical machines 3, and a network switch 4.

The performance status diagnosing device 2 is a device for diagnosing the performance status of the cloud system 1. Each physical machine 3 is a computer that executes applications. On each physical machine 3 runs a virtual machine 3a, and the applications are executed by the virtual machine 3a. Meanwhile, in FIG. 1, although it is illustrated that a single virtual machine 3a runs on the physical machine 3, it is possible to have a plurality of virtual machines 3a running on the physical machine 3.

Meanwhile, the cloud system 1 enables implementation of a three-tier system made of, for example, a web server, an application server, and a database (DB) server. In the three-tier system, a single application is processed using the web server, the application server, and the DB server.

The network switch 4 is a device for connecting the physical machine 3 to an external network. The network switch 4 is disposed at the gateway of the cloud system 1. The performance status diagnosing device 2 captures communication packets from the network switch 4, and uses them in the diagnosis of the performance status of the cloud system 1.

In the cloud system 1, a user uses an application in the cloud system 1 via a network from a client device installed on the outside of the cloud system 1. Hence, the communication packets between the user and the application invariably pass through the network switch 4 disposed at the gateway of the cloud system 1. For that reason, if the communication packets are port-mirrored at the network switch 4 that is disposed at the gateway and captured, it becomes possible to obtain, regarding all applications in the cloud system 1, the communication packets meant for performing communication with the outside.

The performance status diagnosing device 2 includes a capturing unit 21, a packet information storing unit 22, a type-determination-data storing unit 23, a type determining unit 24, a type information storing unit 25, a response time calculating unit 26, a response-time-information storing unit 27, a normalizing unit 28, and a representative information storing unit 29. Moreover, the performance status diagnosing device 2 includes a normalization information storing unit 30, a performance decrease determining unit 31, a determination information storing unit 32, a diagnosing unit 33, a cloud information storing unit 34, a visualizing unit 35, a visualization data storing unit 36, and a display control unit 37.

The capturing unit 21 captures the communication packets passing through and port-mirrored at the network switch 4, and stores the captured communication packets in the packet information storing unit 22. Thus, the packet information storing unit 22 is used to store the information of the communication packets passing through the network switch 4.

The type-determination-data storing unit 23 is used to store the data to be used in determining the types of applications. Herein, the types of applications include applications for which the response time holds importance from the performance perspective, and other-type applications. The performance status diagnosing device 2 treats the applications for which the response time holds importance from the performance perspective as the target applications for diagnosis.

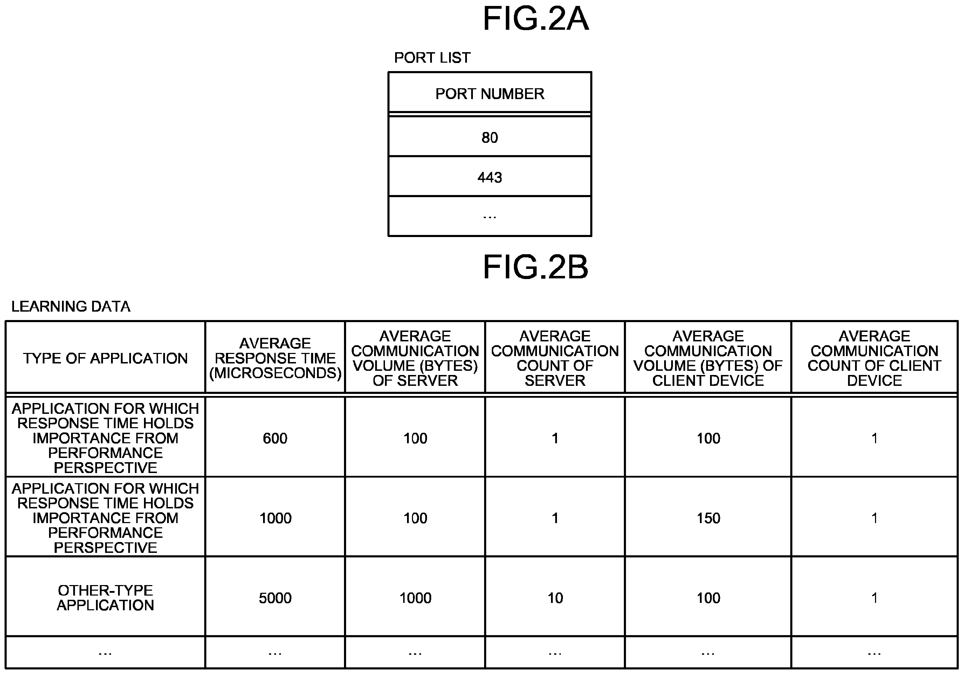

The type determining unit 24 determines, using the data stored in the type-determination-data storing unit 23, the type of application for each communication connection. FIGS. 2A and 2B are diagrams illustrating an example of the type-determination-data storing unit 23. In FIG. 2A is illustrated a case in which a port list representing a list of port numbers is stored as the data meant for determining the types of application. With reference to FIG. 2A, the port numbers stored by the type-determination-data storing unit 23 are the port numbers used by the applications for which the response time holds importance from the performance perspective. For example, the type-determination-data storing unit 23 stores "80" and "443" as the port numbers used by applications for which the response time holds importance from the performance perspective.

The type determining unit 24 analyzes the information about the communication packets as stored in the packet information storing unit 22, and extracts the port number of the server side. Herein, the server implies the virtual machine 3a. If the extracted port number is included in the port list stored in the type-determination-data storing unit 23, then the type determining unit 24 determines that the application performing transmission or reception in the analyzed communication packets is an application for which the response time holds importance from the performance perspective. Then, the type determining unit 24 stores the determination result in the type information storing unit 25.

Moreover, regarding an application whose type is not determinable from the port numbers, the type determining unit 24 determines the type of that application by performing machine learning with communication patterns serving as input.

More particularly, regarding the applications for which the response time holds importance from the performance perspective as well as regarding other-type applications, the type determining unit 24 collects the communication packets in advance. Then, the type determining unit 24 analyzes the collected communication packets and calculates the average response time for a fixed time window (such as one minute), the average communication volume of the server, the average communication count of the server, the average communication volume of the client device, and the average communication count of the client device.

Subsequently, the type determining unit 24 builds a learning machine with the calculated values serving as learning data. As far as a learning machine is concerned, it is possible to use a support vector machine (SVM) or random forests. In FIG. 2B is illustrated a case in which learning data is stored as the data meant for determination of the types of applications in the type-determination-data storing unit 23. As illustrated in FIG. 2B, in the type-determination-data storing unit 23, the following information is stored as a single set of learning data: the type of application, the average response time, the average communication volume of the server, the average communication count of the server, the average communication volume of the client device, and the average communication count of the client device. Herein, the average response time is in the unit of microseconds, and the average communication volume of the server as well as the average communication volume of the client device is in the unit of bytes.

In FIG. 2B, two sets of learning data are specified for the applications of the type "application for which the response time holds importance from the performance perspective"; and a single set of learning data is specified for an application of the type "other-type application". In one of the sets of learning data for the applications having the type "application for which the response time holds importance from the performance perspective"; the average response time is "600", the average communication volume of the server is "100", and the average communication count of the server is "1". Moreover, in that set of learning data, the average communication volume of the client device is "100" and the average communication count of the client device is "1".

Then, from the captured communication packets, the type determining unit 24 calculates, for each communication connection, the average response time, the average communication volume of the server, the average communication count of the server, the average communication volume of the client device, and the average communication count of the client device for the same time window as that of the learning data. Then, from the calculated values, the type determining unit 24 determines the type of application corresponding to the concerned communication connection using the learning machine. Subsequently, the type determining unit 24 stores the determination result in the type information storing unit 25.

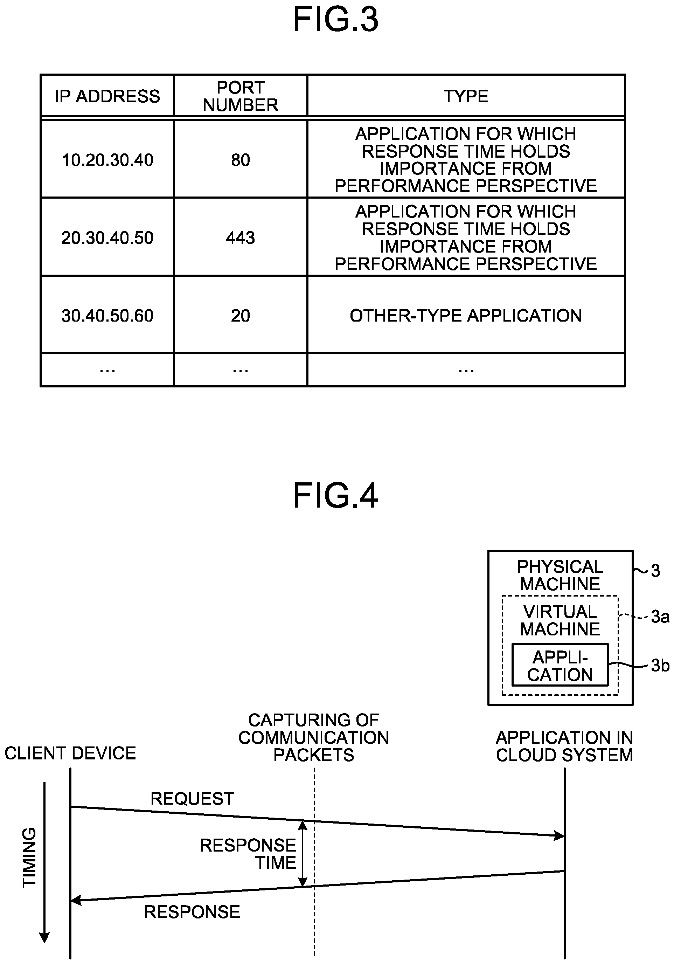

The type information storing unit 25 is used to store the determination result about the types of applications. FIG. 3 is a diagram illustrating an example of the type information storing unit 25. As illustrated in FIG. 3, the type information storing unit 25 is used to store the IP address, the port number, and the type on an application-by-application basis. The IP address represents the IP address of the virtual machine 3a on which the concerned application is running. The port number represents the port number used by the concerned application. The type represents the type of the concerned application. For example, an application that runs on the virtual machine 3a having the IP address "10.20.30.40" uses the port number "80" and is of the type "application for which the response time holds importance from the performance perspective".

Regarding an application for which the response time holds importance from the performance perspective, the response time calculating unit 26 analyzes the communication packets and calculates the response time; and stores the calculated response time in the response-time-information storing unit 27. If the communication packets are not encrypted, then the response time calculating unit 26 rebuilds a protocol message and calculates the response time according to the timing of the request and the timing of the response.

That is, the response time calculating unit 26 reconstructs a protocol message from the communication packets, and determines the communication packets representing the request message and the communication packets representing the response message. Then, the response time calculating unit 26 calculates, as the response time, the time window starting from the transmission of the request message to the reception of a response message.

FIG. 4 is a diagram for explaining a method for calculating the response time. As illustrated in FIG. 4, a request message transmitted by a client device is processed by an application 3b running on the virtual machine 3a in the cloud system 1, and a response message is transmitted from the application 3b to the client device. The response time calculating unit 26 sets the time window between the timing of capturing the request message and the timing of capturing the response message as the response time.

If the communication packets are encrypted, then the response time calculating unit 26 analyzes the transmission-reception flow of the communication packets and estimates the response time of the application. When the communication packets are encrypted, the protocol is not analyzable because the contents of the communication packets are not known. Hence, the response time calculating unit 26 is not able to reconstruct the request message or the response message. In that regard, by taking into account the "long polling" technology meant for transmitting data in real time on a unilateral basis from the application side, the response time calculating unit 26 estimates the response time from the time windows of the communication packets between the client device and the application in the cloud system 1.

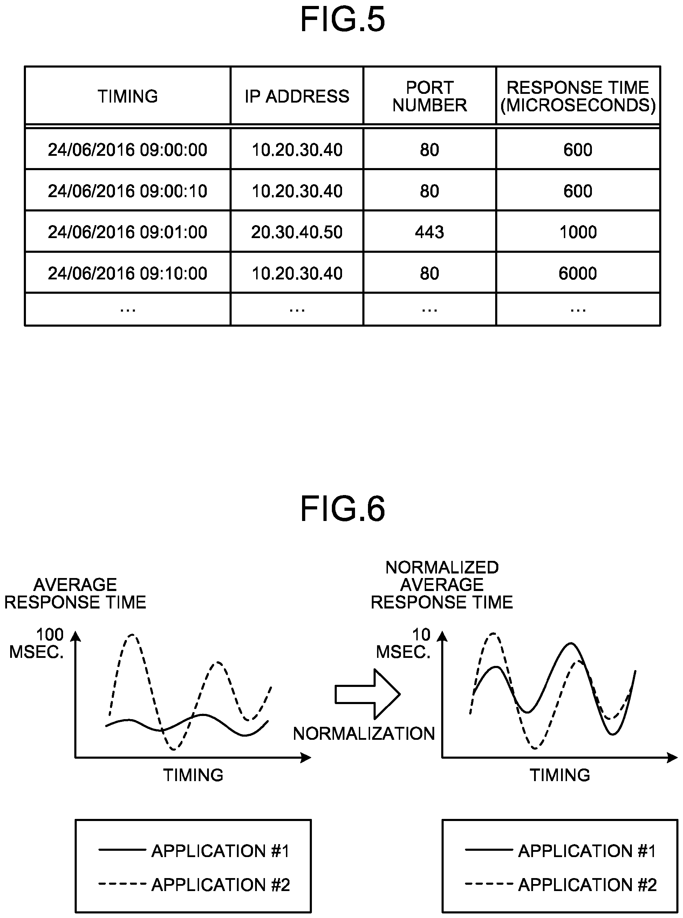

The response-time-information storing unit 27 is used to store the response time calculated on an application-by-application basis by the response time calculating unit 26. FIG. 5 is a diagram illustrating an example of the response-time-information storing unit 27. As illustrated in FIG. 5, the response-time-information storing unit 27 is used to store the timing, the IP address, the port number, and the response time in a corresponding manner.

Herein, the timing represents the timing of calculation of the response time. The IP address represents the IP address of the virtual machine 3a on which the concerned application is running. The port number represents the port number used by the concerned application. The response time represents the response time calculated by the response time calculating unit 26. Herein, the response time is in the unit of microseconds. For example, an application that runs on the virtual machine 3a having the IP address "10.20.30.40" and that uses the port number "80" has the response time of "600" on "24/06/2016 09:00:00".

The normalizing unit 28 reads the response times, which have been calculated by the response time calculating unit 26, from the response-time-information storing unit 27; and calculates the average response time in each time window on an application-by-application basis. Then, the normalizing unit 28 performs normalization of the average response time using the information stored in the representative information storing unit 29, and stores the normalized average response time in the normalization information storing unit 30.

FIG. 6 is a diagram for explaining the normalization of the average response time. Depending on the application, the response time can take different values in normal condition and has a different standard for considering delay. Hence, if the response time of an application is used without modification, then it becomes difficult to determine whether or not there is a problem in the performance status. In that regard, the performance status diagnosing device 2 normalizes the average response time and converts it into a scale that is comparable among the applications. With reference to FIG. 6, regarding applications #1 and #2 having different values that can be taken in normal condition, as a result of normalizing the respective average response times, it becomes possible to compare the response times.

Regarding an average response time t, with a fundamental statistic tᵣ serving as the representative response time, the normalizing unit 28 calculates a normalized average response time tₙ as tₙ=t/tᵣ. Examples of the fundamental statistic include the average, the median value, and the mode value.

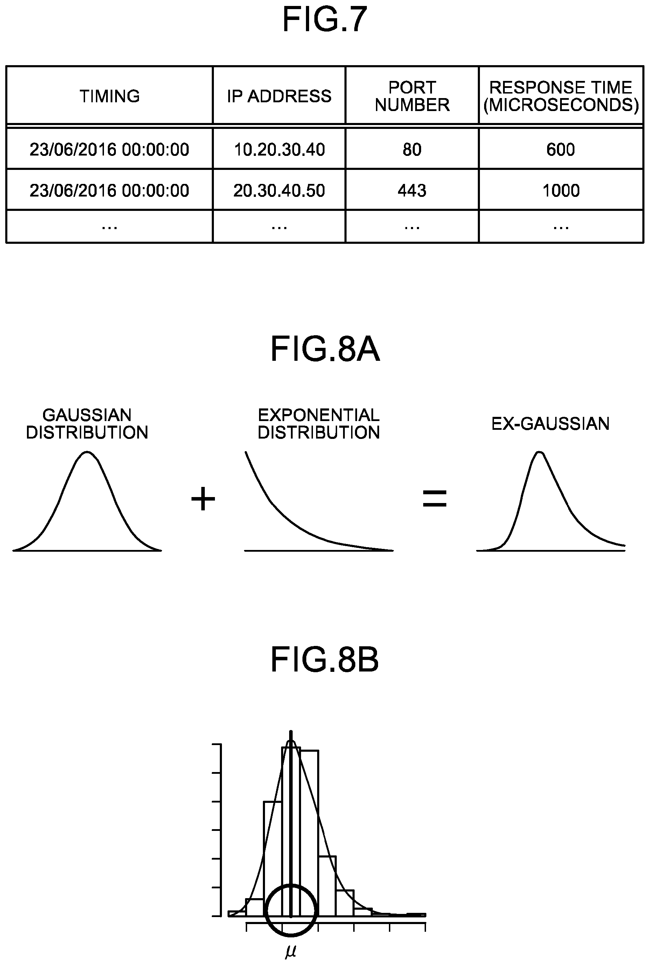

The representative information storing unit 29 is used to store the representative response time of each application. FIG. 7 is a diagram illustrating an example of the representative information storing unit 29. As illustrated in FIG. 7, the representative information storing unit 29 is used to store the timing, the IP address, the port number, and the response time on an application-by-application basis.

The timing represents the timing of calculation of the representative response time. The IP address represents the IP address of the virtual machine 3a on which the concerned application is running. The port number represents the port number used by the concerned application. The response time represents the representative response time. Herein, the representative response time is in the unit of microseconds. For example, an application that runs on the virtual machine 3a having the IP address "10.20.30.40" and that uses the port number "80" has the representative response time of "600" as calculated on "23/06/2016 00:00:00".

The normalizing unit 28 calculates the average response time t for each fixed time window (such as one minute) on an application-by-application basis, and calculates the fundamental statistic tᵣ of the average response times t. As the data for calculating the fundamental statistic, the data of the whole previous day is used. When the fixed time window is of one minute, 60*24=1440 sets of sample data are obtained from the data of one day.

Meanwhile, in place of using the fundamental statistic tᵣ, the distribution of average response times can be fit in the ex-Gaussian distribution, and a parameter µ at that time can be treated as the representative response time. FIGS. 8A and 8B are diagrams for explaining the ex-Gaussian distribution. The ex-Gaussian distribution is a type of probability distribution and, as illustrated in FIG. 8A, is obtained by convolution of the Gaussian distribution (normal distribution) and the exponential distribution. The ex-Gaussian distribution is determined according to three parameters, namely, the mean µ of the Gaussian component, the standard deviation σ of the Gaussian component, and the mean τ of the exponential component. In the ex-Gaussian distribution, as illustrated in FIG. 8B, the parameter µ represents the value at the peak portion of the distribution.

The normalizing unit 28 calculates the average response time t for each fixed time window (such as one minute) on an application-by-application basis, and fits the distribution of average response times in the ex-Gaussian distribution. As the data for fitting the distribution in the ex-Gaussian distribution, the data of the whole previous data is used. When the fixed time window is of one minute, 60*24=1440 sets of sample data are obtained from the data of one day.

Subsequently, the normalizing unit 28 determines the likelihood of the fitting using the one-sample Kolmogorov-Smirnov test. For the one-sample Kolmogorov-Smirnov test, there are two inputs, namely, the distribution of average response times and the distribution curve of the fitting result. The normalizing unit 28 performs the test at, for example, the significance level of 0.05 and, if the test result indicates that the distribution of average response times represents the ex-Gaussian distribution, sets the parameter µ of the ex-Gaussian distribution as the representative average response time.

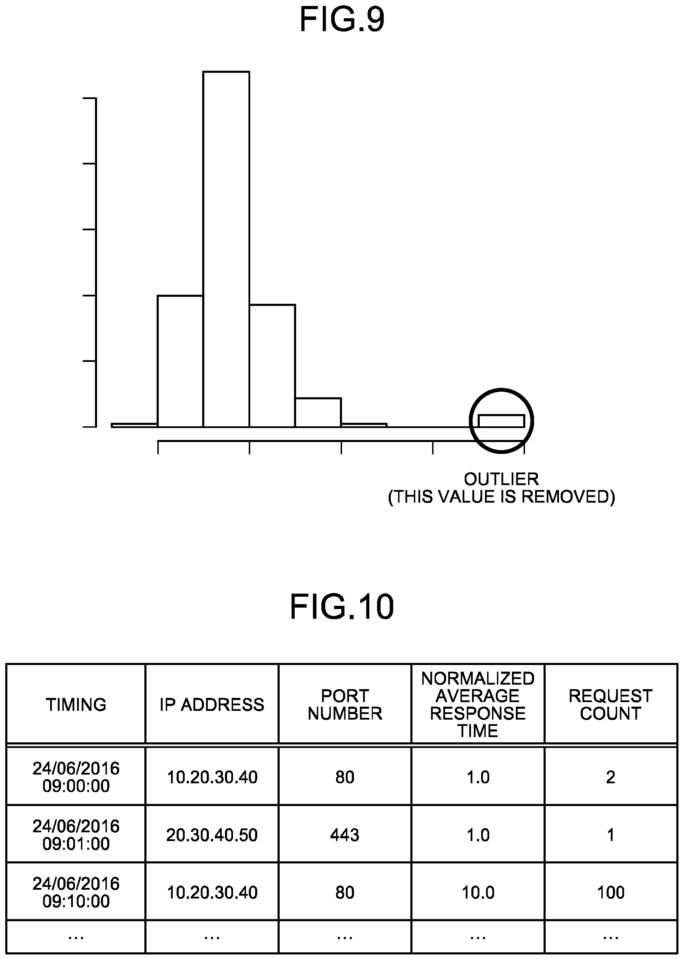

Meanwhile, before fitting the distribution of average response times in the ex-Gaussian distribution, the normalizing unit 28 can remove outliers. FIG. 9 is a diagram for explaining an outlier. As illustrated in FIG. 9, an outlier is a value that is way off from the other values. If an outlier is present among the average response times, there are times when the outlier cannot be successfully fit in the ex-Gaussian distribution. For that reason, the normalizing unit 28 removes such outliers before performing fitting. Examples of the method for outlier removal include the Tukey outlier removal.

The normalization information storing unit 30 is used to store, on an application-by-application basis, the normalized average response time obtained by the normalizing unit 28. FIG. 10 is a diagram illustrating an example of the normalization information storing unit 30. As illustrated in FIG. 10, the normalization information storing unit 30 is used to store the timing, the IP address, the port number, the normalized average response time, and the request count on an application-by-application basis.

The timing represents the timing of calculation of the response time. The IP address represents the IP address of the virtual machine 3a on which the concerned application is running. The port number represents the port number used by the concerned application. The normalized average response time represents the average response time that has been normalized. The request count represents the number of requests used in the calculation of the normalized average response time.

For example, regarding an application that runs on the virtual machine 3a having the IP address "10.20.30.40" and that uses the port number "80", the normalized average response time is "1.0" related to the response time calculated on "24/06/2016 09:00:00". Moreover, regarding the requests used in the calculation of the normalized average response time, the request count is "2".

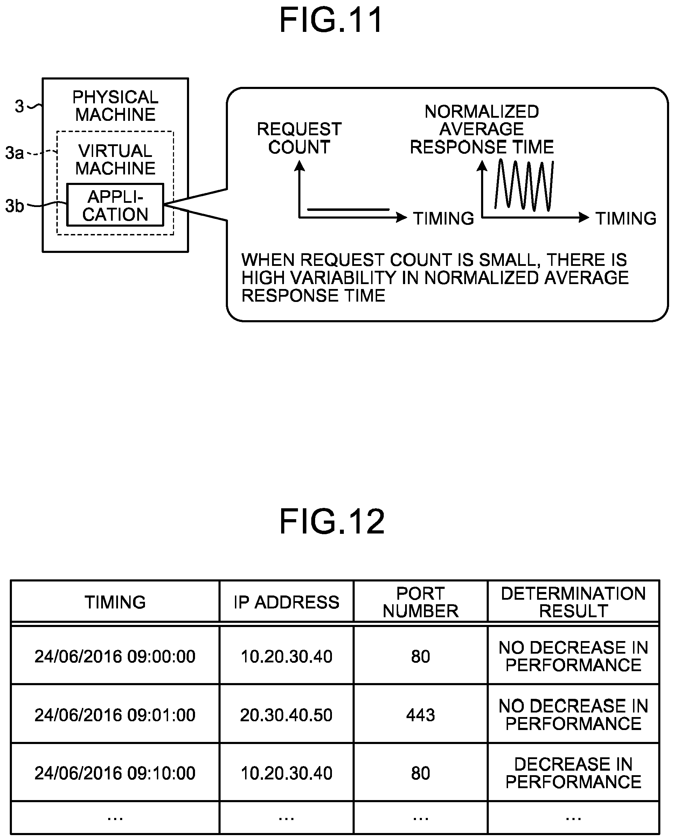

The performance decrease determining unit 31 determines, based on the normalized average response time and the request count, whether there is a decrease in the performance of the application; and stores the determination result in the determination information storing unit 32. However, when the request count is low, there is an increase in the variability in the normalized average response time. FIG. 11 is a diagram for explaining the variability in the normalized average response time in the case in which the request count is low. As illustrated in FIG. 11, when the request count is low, there is a high variability of the normalized average response time.

In this way, when the request count is low, in spite of the fact that the performance has not decreased, there is a possibility of an increase in the normalized average response time. For that reason, when the request count is low, even if the normalized response time is long, the performance decrease determining unit 31 determines that there is no problem in the performance.

More particularly, using a threshold value Tᵣₜ of the normalized average response time and a threshold value T_{req-min} of the request count, the performance decrease determining unit 31 determines that the performance of the application has decreased if (the normalized average response time)>(the threshold value Tᵣₜ) holds true as well as (the threshold value T_{req}-ₘᵢₙ)<(the request count) holds true.

The determination information storing unit 32 is used to store, on an application-by-application basis, the determination result obtained by the performance decrease determining unit 31. FIG. 12 is a diagram illustrating an example of the determination information storing unit 32. As illustrated in FIG. 12, the determination information storing unit 32 is used to store the timing, the IP address, the port number, and the determination result on an application-by-application basis.

The timing represents the timing of calculation of the response time. The IP address represents the IP address of the virtual machine 3a on which the concerned application is running. The port number represents the port number used by the concerned application. The determination result represents the determination of whether or not the performance has decreased, and either indicates "no decrease in performance" or indicates "decrease in performance". For example, regarding an application that runs on the virtual machine 3a having the IP address "10.20.30.40" and that uses the port number "80", the determination result "no decrease in performance" is stored corresponding to "24/06/2016 09:00:00".

Regarding an application that has undergone a decrease in the performance, the diagnosing unit 33 refers to the normalization information storing unit 30 and determines whether the decrease in the performance is attributable to the application or attributable to the infrastructure of cloud computing. Then, the diagnosing unit 33 stores the determination result in the cloud information storing unit 34 and, if the decrease is determined to be attributable to the infrastructure of cloud computing, notifies an operations manager 5 of the cloud system 1 via, for example, an electronic mail.

More particularly, the diagnosing unit 33 determines whether or not any one of the following three cases is applicable and accordingly determines whether the decrease in the performance is attributable to the application or attributable to the infrastructure of cloud computing. If none of the following three cases is applicable, then the diagnosing unit 33 determines that the cause of the decrease in the performance is not clear.

In the case #1, there is a correlation between the request count and the performance status (the normalized average response time) of the application itself. In this case, the diagnosing unit 33 determines that the decrease in the performance is occurring due to the effect of an increase in the load of the application itself, and thus determines that the decrease in the performance is attributable to the application. Herein, the diagnosing unit 33 performs a decorrelation test between the request count and the normalized average response time of the application at, for example, the significance level of 0.05 and, if the determination result is significant, determines that the decrease in the performance is attributable to the application.

In the case #2, there is a correlation between the performance status (the normalized average response time) of a plurality of applications among different users. In this case, the diagnosing unit 33 determines that the performance has decreased because some sort of resources are competing among the applications thereby leading to a shortage of resources, and thus determines that the decrease in the performance is attributable to the infrastructure of cloud computing. Regarding all combinations of the applications of the users other than the user whose application has undergone a decrease in the performance, the diagnosing unit 33 performs a decorrelation test between the normalized average response times of two applications at, for example, the significance level of 0.05. If the determination result is significant, then the diagnosing unit 33 determines that the decrease in the performance is attributable to the infrastructure of cloud computing.

In the case #3, the request count of the application of a particular user is correlated with the performance status (the normalized average response time) of the application of another user. In that case, since the application of the particular user is using some sort of resources, the diagnosing unit 33 determines that the use of resources is affecting the performance of the application of the other user and causing a decrease in the performance, and thus determines that the decrease in the performance is attributable to the infrastructure of cloud computing. Regarding all applications of the users other than the user whose application has undergone a decrease in the performance; the diagnosing unit 33 performs, at, for example, the significance level of 0.05, a decorrelation test of the normalized average response time with the request count of the application that has undergone a decrease in the performance. If the determination result is significant, then the diagnosing unit 33 determines that the decrease in the performance is attributable to the infrastructure of cloud computing.

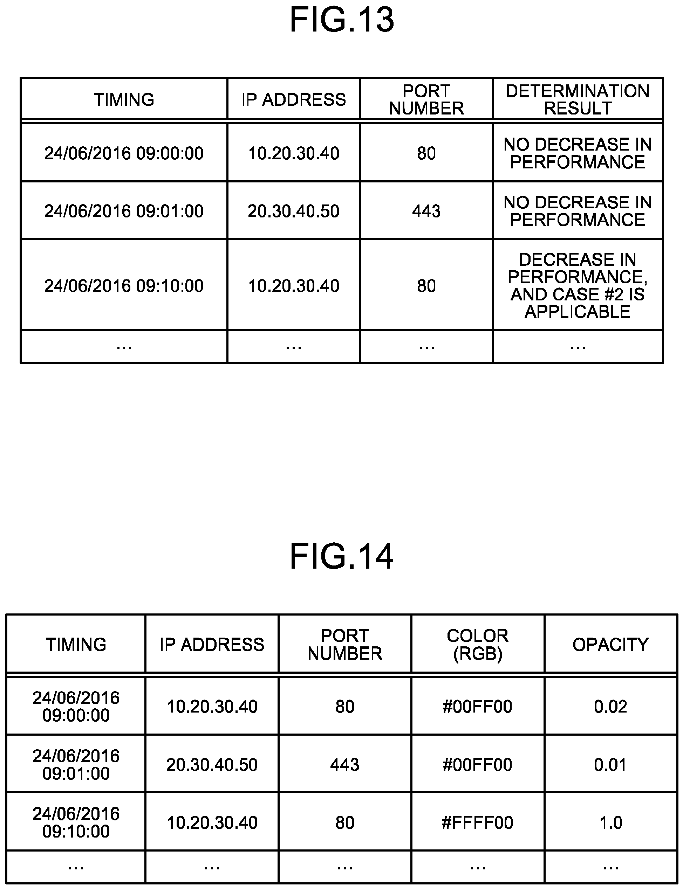

The cloud information storing unit 34 is used to store, on an application-by-application basis, the determination result obtained by the diagnosing unit 33. FIG. 13 is a diagram illustrating an example of the cloud information storing unit 34. As illustrated in FIG. 13, the cloud information storing unit 34 is used to store the timing, the IP address, the port number, and the determination result on an application-by-application basis.

The timing represents the timing of calculation of the response time. The IP address represents the IP address of the virtual machine 3a in which the concerned application is running. The port number represents the port number used by the concerned application. The determination result represents the determination result obtained by the diagnosing unit 33. When an applicable case is present, a notification thereof is added to the determination result stored in the determination information storing unit 32. On the other hand, when there is no decrease in the performance, the determination result is same as the information stored in the determination information storing unit 32.

In FIG. 13, for example, regarding an application that runs on the virtual machine 3a having the IP address "10.20.30.40" and that uses the port number "80", the determination result regarding the response time calculated on "24/06/2016 09:10:00" indicates "decrease in performance, and case #2 is applicable".

The visualizing unit 35 reads the normalized average response times from the normalization information storing unit 30; creates visualization data for all applications in such a way that there is continuous variation in the color depending on the magnitude of the normalized average response times; and stores the visualization data in the visualization data storing unit 36.

For example, when the normalized average response time is "1", the visualizing unit 35 creates visualization data representing "green" that indicates normal condition. When the normalized average response time is "10", the visualizing unit 35 creates visualization data representing "yellow" that indicates worsening of the performance to a certain extent. When the normalized average response time is "100", the visualizing unit 35 creates visualization data representing "red" that indicates worsening of the performance. When the normalized average response time is not calculated, the visualizing unit 35 creates visualization data representing "white" that indicates absence of data.

The visualization data storing unit 36 is used to store the visualization data created by the visualizing unit 35. FIG. 14 is a diagram illustrating an example of the visualization data storing unit 36. As illustrated in FIG. 14, the visualization data storing unit 36 is used to store the timing, the IP address, the port number, the color, and the opacity on an application-by-application basis.

The timing represents the timing of calculation of the response time. The IP address represents the IP address of the virtual machine 3a on which the concerned application is running. The port number represents the port number used by the concerned application. The color represents RGB of the color indicating the performance status. The opacity represents a value indicating the magnitude of the request count and ranges from 0 to 1.0.

For example, regarding an application that runs on the virtual machine 3a having the IP address "10.20.30.40" and that uses the port number "80", visualization data for the normalized average response time calculated on "24/06/2016 09:00:00" has "#00FF00" as the value of RGB of the color indicating the performance status and has "0.02" as the opacity indicating the magnitude of the request count.

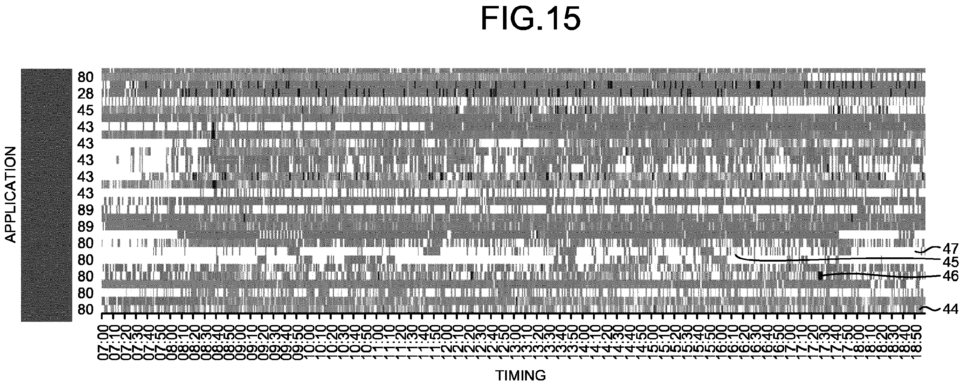

The display control unit 37 reads the visualization data from the visualization data storing unit 36, and displays the performance status of each application on a display device 6. FIG. 15 is a diagram illustrating an exemplary display of the performance statuses. In FIG. 15, the vertical axis represents the applications, and the horizontal axis represents the timings. Herein, the timings given on the horizontal axis have intervals of 10 minutes, for example.

Since FIG. 15 is illustrated in grayscale, the colors are not visible. However, in the actual display screen, for example, a display position 44 is displayed in green; a display position 45 is displayed in yellow; a display position 46 is displayed in red; and a display position 47 is displayed in white.

As a result of the visualization, the operations manager 5 of the cloud system 1 becomes able to get an overview of the performance status of all applications in the cloud system 1. As a result of looking at the result of visualization, the operations manager 5 of the cloud system 1 can check the number of virtual machines 3a in which the performance is lagging and check the tendency of occurrence of the lag.

Meanwhile, according to the request frequency within a fixed time window, the visualizing unit 35 can also create visualization data in which the contrasting density of the colors is varied. For example, if the request frequency per unit time is high, then the visualizing unit 35 creates visualization data with dark colors. On the other hand, if the request frequency per unit time is low, then the visualizing unit 35 creates visualization data with faint colors.

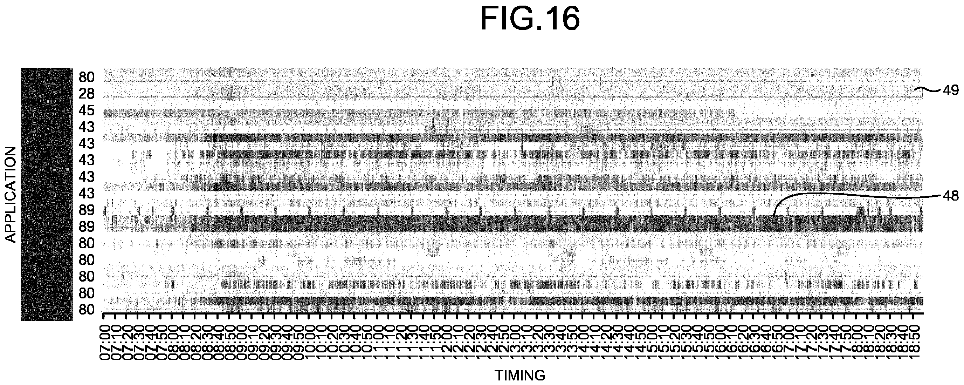

FIG. 16 is a diagram illustrating a display example in which the contrasting density of the colors is varied according to the request frequency. A display position 48 is displayed with a dark color because of a high request frequency, while a display position 49 is displayed with a faint color because of a low request frequency.

If the request frequency within a fixed time window is low, there is a possibility that that the response to the small number of requests was only incidentally delayed. Moreover, since the frequency is low, the effect on the user is also small. Hence, by displaying the response delays having a low frequency in a less prominent manner, the operations manager 5 becomes able to correctly understand the overall performance status of the cloud system 1. The performance status diagnosing device 2 makes the response delays having a high request frequency and having a greater impact more prominent, so that any oversight by the operations manager 5 can be prevented.

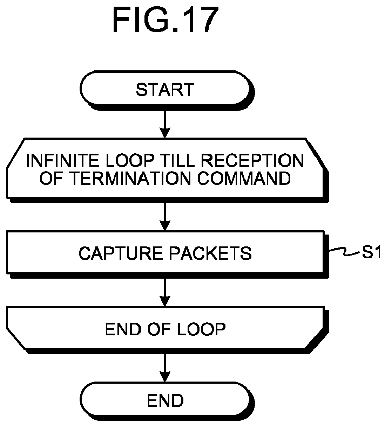

Given below is the explanation of the flow of a packet capturing operation. FIG. 17 is a flowchart for explaining the flow of a packet capturing operation. As illustrated in FIG. 17, the capturing unit 21 captures communication packets at regular time windows (Step S1) and writes the information of the captured communication packets in the packet information storing unit 22. The capturing unit 21 repeatedly performs the operation at Step S1 until a termination command is received from the performance status diagnosing device 2.

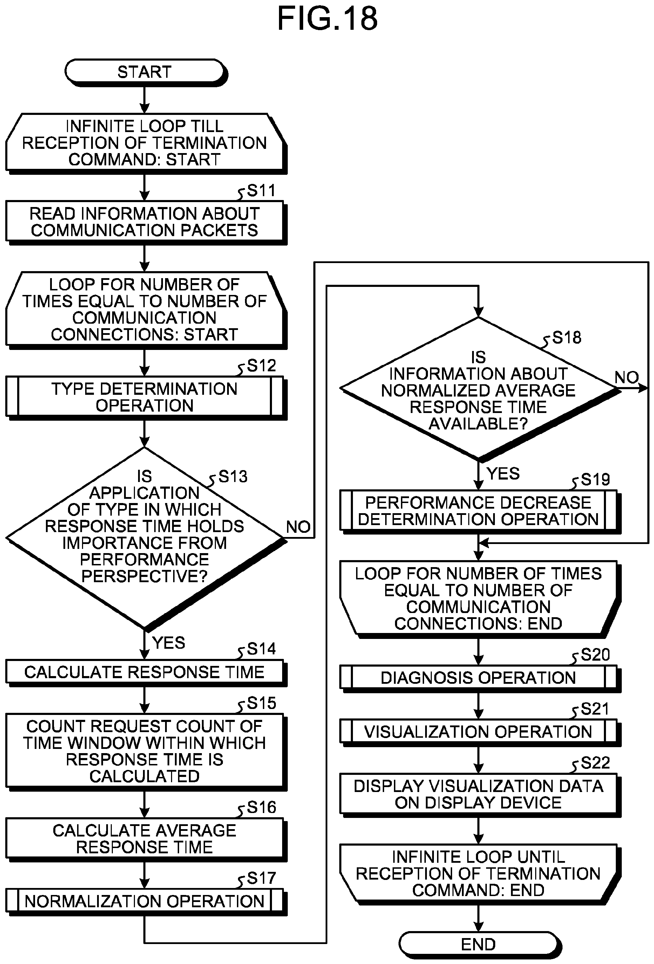

Given below is the explanation of the flow of an operation for diagnosing the performance status of the infrastructure of cloud computing. FIG. 18 is a flowchart for explaining the flow of an operation for diagnosing the performance status of the infrastructure of cloud computing. As illustrated in FIG. 18, until a termination command is received, the performance status diagnosing device 2 repeatedly performs the operations from Step S11 to Step S21 explained below.

The performance status diagnosing device 2 reads the information about communication packets from the packet information storing unit 22 (Step S11), and repeatedly performs the subsequent operations from Step S12 to Step S19 for a number of times equal to the number of communication connections.

The performance status diagnosing device 2 performs a type determination operation for determining the type of the concerned application (Step S12), and determines whether or not the application is of the type in which the response time holds importance from the performance perspective (Step S13). If the application is not of the type in which the response time holds importance from the performance perspective, then the performance status diagnosing device 2 processes the next communication connection.

On the other hand, when the application is of the type in which the response time holds importance from the performance perspective, the performance status diagnosing device 2 calculates the response time (Step S14) and stores it in the response-time-information storing unit 27. Then, the performance status diagnosing device 2 counts the request count in the time window within which the response time is calculated (Step S15). Subsequently, the performance status diagnosing device 2 calculates the average response time (Step S16) and performs a normalization operation to normalize the average response time (Step S17).

Then, the performance status diagnosing device 2 determines whether or not information about the normalized average response time is available (Step S18). If information about the normalized average response time is not available, then the performance status diagnosing device 2 processes the next communication connection. The case in which the information about the normalized average response time is not available is the case in which, at the time of calculating the representative average time using the ex-Gaussian distribution, the distribution of average response times does not fit in the ex-Gaussian distribution.

On the other hand, when information about the normalized average response time is available, the performance status diagnosing device 2 performs a performance decrease determination operation for determining whether or not the performance of the application has decreased (Step S19). Subsequently, the performance status diagnosing device 2 processes the next communication connection.

After repeatedly performing the operations from Step S12 to Step S19 for a number of times equal to the number of communication connections, the performance status diagnosing device 2 performs a diagnosis operation for diagnosing whether or not the decrease in the performance is attributable to the infrastructure of cloud computing (Step S20). Then, the performance status diagnosing device 2 performs a visualization operation for creating visualization data (Step S21). Subsequently, the performance status diagnosing device 2 displays the visualization data, which is stored in the visualization data storing unit 36, on the display device 6 (Step S22).

In this way, as a result of using the normalized average response time, the performance status diagnosing device 2 can identify whether the decrease in the performance of the application is attributable to the infrastructure of cloud computing or attributable to the application.

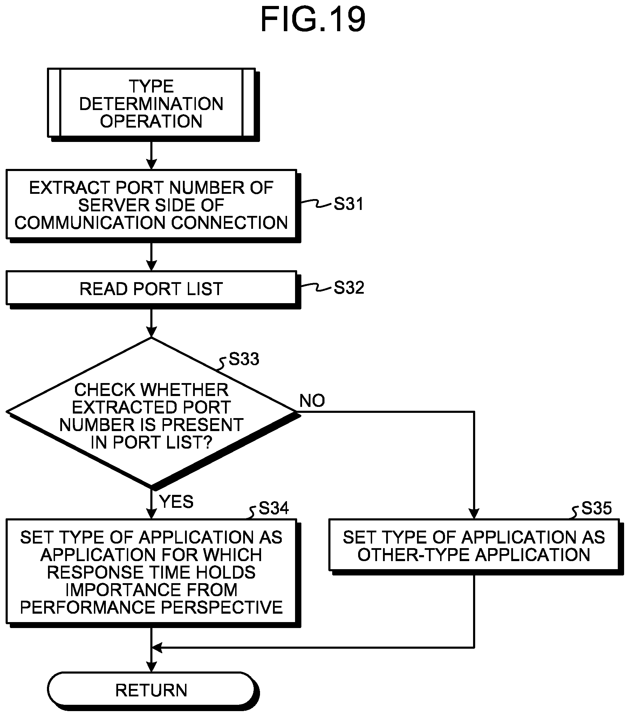

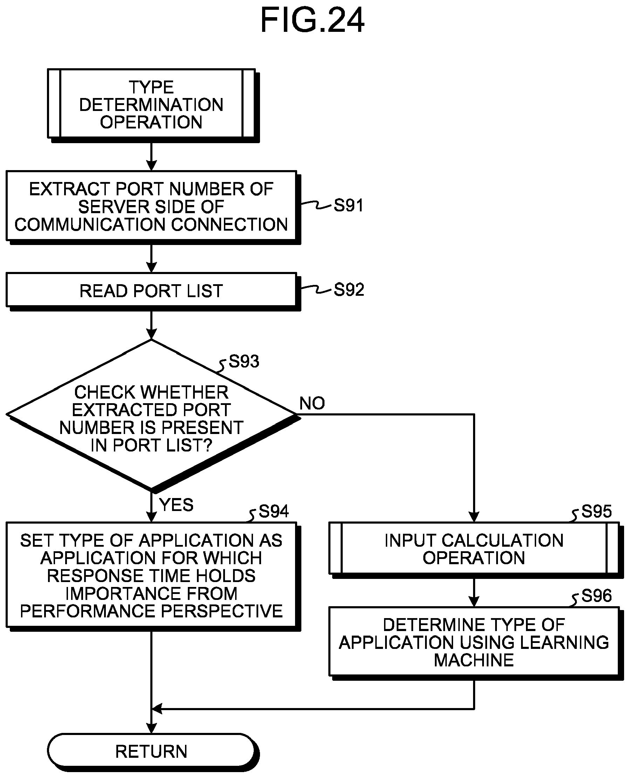

FIG. 19 is a flowchart for explaining the flow of a type determination operation. In FIG. 19 is illustrated a case of using only the port list; while in FIG. 24 is illustrated a case of using machine learning. As illustrated in FIG. 19, the type determining unit 24 extracts, from the information about communication packets, the port number of the server side of the communication connection (Step S31). Then, the type determining unit 24 reads the port list from the type-determination-data storing unit 23 (Step S32).

Subsequently, the type determining unit 24 determines whether or not the extracted port number is present in the port list (Step S33). If the extracted port number is present in the port list, then the type determining unit 24 sets the type of the application as the application for which the response time holds importance from the performance perspective (Step S34). Subsequently, the type determining unit 24 writes the type in the type information storing unit 25. However, if the extracted port number is not present in the port list, then the type determining unit 24 sets the type of the application as other-type application (Step S35) and writes the type in the type information storing unit 25.

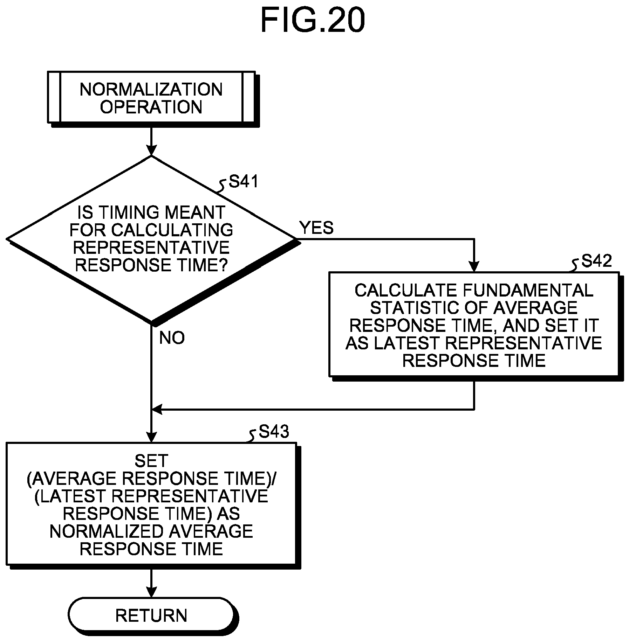

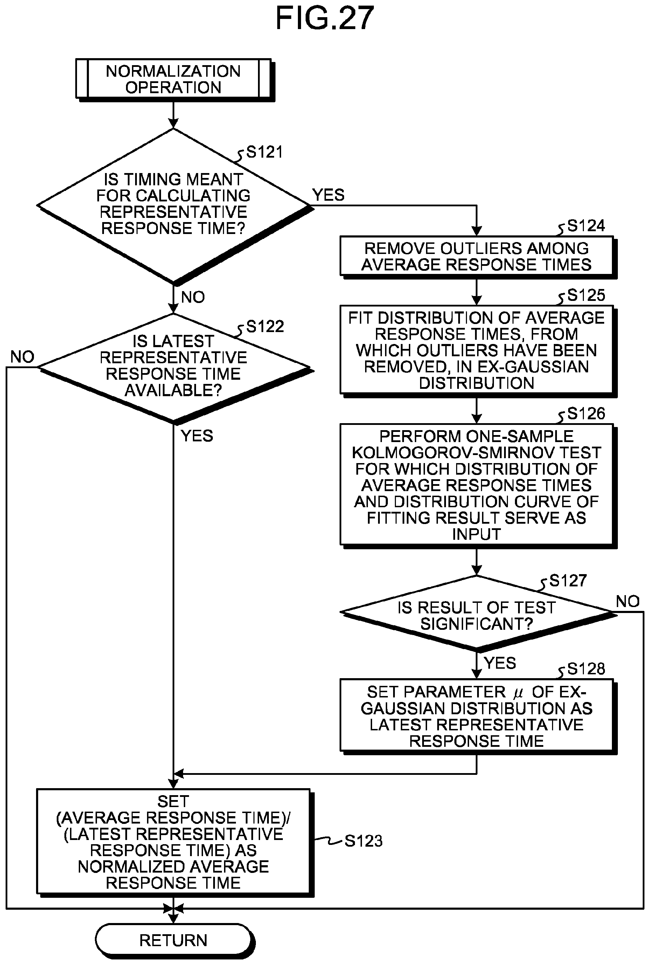

FIG. 20 is a flowchart for explaining the flow of a normalization operation. In FIG. 20 is illustrated a case of using the fundamental statistic as the representative response time; while in FIG. 27 is illustrated a case of using the ex-Gaussian distribution. As illustrated in FIG. 20, the normalizing unit 28 determines whether or not the timing is meant for calculating the representative response time (Step S41). If the timing is not meant for calculating the representative response time, then the system control proceeds to Step S43. When the timing is meant for calculating the representative response time, the normalizing unit 28 calculates the fundamental statistic of the average response time and sets it as the latest representative response time (Step S42).

Subsequently, the normalizing unit 28 sets (the average response time)/(the latest representative response time) as the normalized average response time (Step S43).

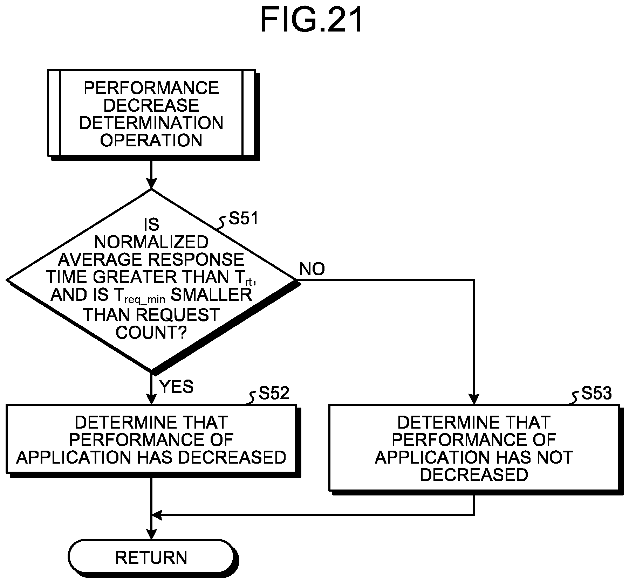

FIG. 21 is a flowchart for explaining the flow of a performance decrease determination operation. As illustrated in FIG. 21, the performance decrease determining unit 31 determines whether or not the normalized average response time is greater than the threshold value Tᵣₜ as well as whether or not the request count is greater than the threshold value T_{req-min} (Step S51) .

If the normalized average response time is greater than the threshold value Tᵣₜ as well as the request count is greater than the threshold value T_{req-min}, then the performance decrease determining unit 31 determines that the performance of the application has decreased (Step S52), and writes the determination result in the determination information storing unit 32. On the other hand, if the normalized average response time is equal to or smaller than the threshold value Tᵣₜ or if the request count is equal to or smaller than the threshold value T_{req-min}, then the performance decrease determining unit 31 determines that the performance of the application has not decreased (Step S53), and writes the determination result in the determination information storing unit 32.

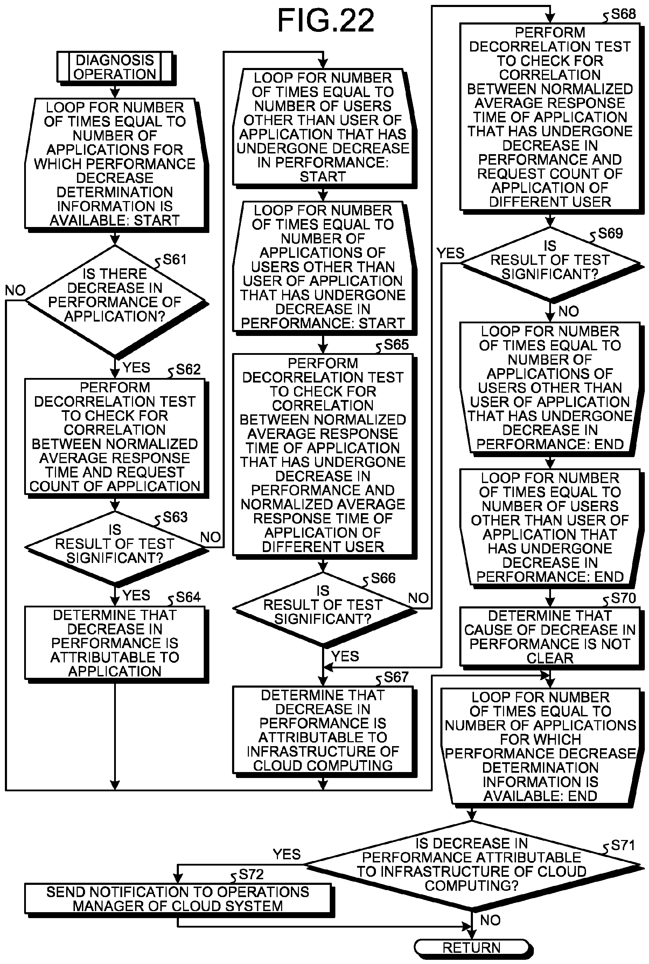

FIG. 22 is a flowchart for explaining the flow of a diagnosis operation. As illustrated in FIG. 22, the diagnosing unit 33 repeatedly performs the operations from Step S61 to Step S70 explained below for a number of times equal to the number of applications stored in the determination information storing unit 32.

The diagnosing unit 33 determines whether or not the performance of the application has decreased (Step S61). If the performance of the application has not decreased, then the diagnosing unit 33 processes the next application. However, if the performance of the application has decreased, then the diagnosing unit 33 performs a decorrelation test to check whether there is a correlation between the normalized average response time and the request count of the application that has undergone a decrease in the performance (Step S62).

Then, the diagnosing unit 33 determines whether or not the result of the test is significant (Step S63). If the result of the test is significant, then the diagnosing unit 33 determines that the decrease in the performance is attributable to the application (Step S64), and writes the determination result in the cloud information storing unit 34. Subsequently, the diagnosing unit 33 processes the next application.

On the other hand, if the result of the test is not significant, then the diagnosing unit 33 repeatedly performs the following operations from Step S65 to Step S69 with respect to each other user other than the user of the application that has undergone a decrease in the performance.

The diagnosing unit 33 performs a decorrelation test to check whether there is a correlation between the normalized average response time of the application which has undergone a decrease in the performance and the normalized average response time of the application of a different user (Step S65). Then, the diagnosing unit 33 determines whether or not the result of the test is significant (Step S66). If the result of the test is significant, then the diagnosing unit 33 determines that the decrease in the performance is attributable to the infrastructure of cloud computing (Step S67), and writes the determination result in the cloud information storing unit 34. Subsequently, the diagnosing unit 33 processes the next application.

On the other hand, if the result of the test is not significant, then the diagnosing unit 33 performs a decorrelation test to check whether there is a correlation between the normalized average response time of the application which has undergone a decrease in the performance and the request count of the application of a different user (Step S68). Then, the diagnosing unit 33 determines whether or not the result of the test is significant (Step S69). If the result of the test is significant, then the diagnosing unit 33 determines that the decrease in the performance is attributable to the infrastructure of cloud computing (Step S67), and writes the determination result in the cloud information storing unit 34. Subsequently, the diagnosing unit 33 processes the next application.

Meanwhile, regarding all applications of all users other than the user whose application has undergone a decrease in the performance, if a significant result is not obtained from the decorrelation test performed at Steps S65 and S68, then the diagnosing unit 33 determines that the cause of the decrease in the performance is not clear (Step S70). Subsequently, the diagnosing unit 33 writes the determination result in the cloud information storing unit 34 and processes the next application.

After performing the operations from Step S61 to Step S70 for a number of times equal to the number of applications stored in the determination information storing unit 32, the diagnosing unit 33 determines whether or not the decrease in the performance is attributable to the infrastructure of cloud computing (Step S71). If the decrease in the performance is attributable to the infrastructure of cloud computing, then the diagnosing unit 33 notifies the operations manager 5 of the cloud system 1 about the same (Step S72).

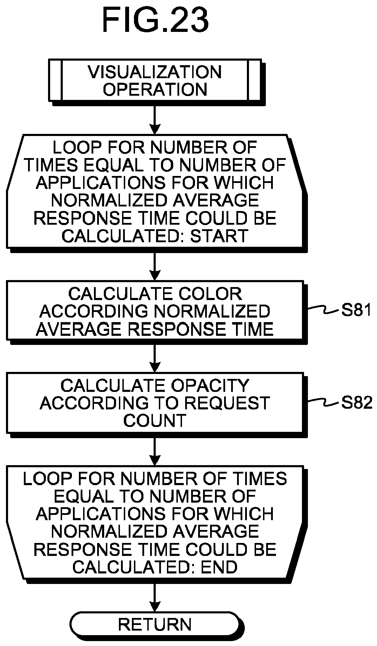

FIG. 23 is a flowchart for explaining the flow of a visualization operation. As illustrated in FIG. 23, the visualizing unit 35 repeatedly performs the following operations at the Steps S81 and S82 for a number of times equal to the number of applications for which the normalized average response time could be calculated.

The visualizing unit 35 calculates the color according to the normalized average response time (Step S81) and calculates the opacity according to the request count (Step S82). Then, the visualizing unit 35 writes the calculated color and the calculated opacity in the visualization data storing unit 36.

Given below is the explanation of the flow of a type determination operation performed using machine learning. FIG. 24 is a flowchart for explaining the flow of a type determination operation performed using machine learning. As illustrated in FIG. 24, the type determining unit 24 extracts, from the information about communication packets, the port number of the server side of the communication connection (Step S91). Then, the type determining unit 24 reads the port list from the type-determination-data storing unit 23 (Step S92).

Subsequently, the type determining unit 24 determines whether or not the extracted port number is present in the port list (Step S93). If the extracted port number is present in the port list, then the type determining unit 24 sets the type of the application as the application for which the response time holds importance from the performance perspective (Step S94). However, if the extracted port number is not present in the port list, then the type determining unit 24 performs an input calculation operation for calculating the data to be input to a learning machine (Step S95). Then, the type determining unit 24 determines the type of the application using the learning machine (Step S96).

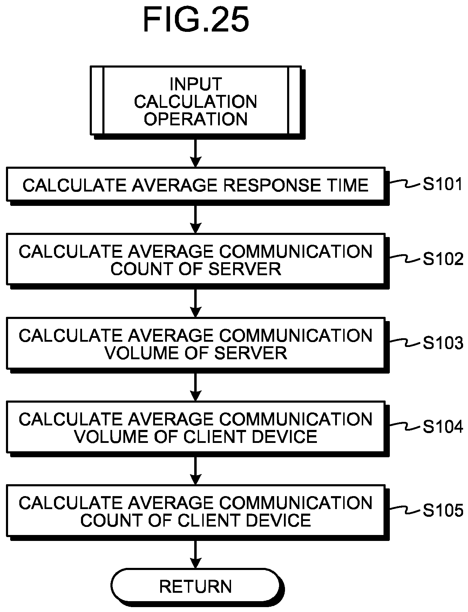

FIG. 25 is a flowchart for explaining the flow of an input calculation operation. As illustrated in FIG. 25, the type determining unit 24 calculates the average response time (Step S101). Then, the type determining unit 24 calculates the average communication count of the server (Step S102), and calculates the average communication volume of the server (Step S103). Subsequently, the type determining unit 24 calculates the average communication volume of the client device (Step S104), and calculates the average communication count of the client device (Step S105).

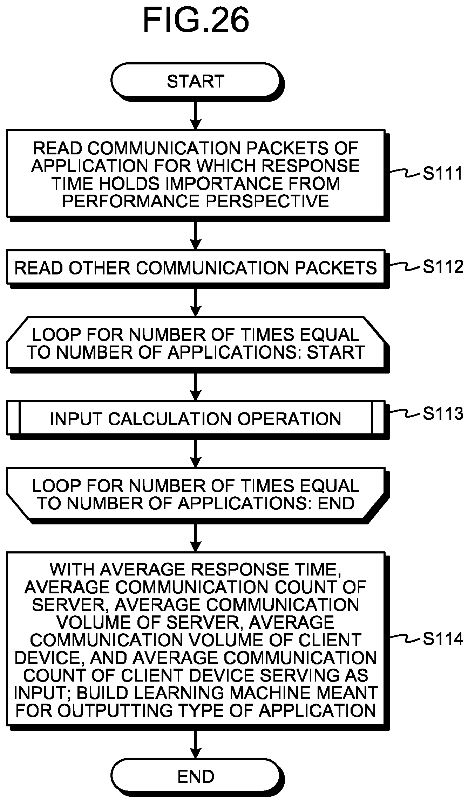

FIG. 26 is a flowchart for explaining the flow of an operation for building a learning machine. As illustrated in FIG. 26, the type determining unit 24 reads the communication packets of an application for which the response time holds importance from the performance perspective (Step S111), and reads other communication packets (Step S112).

Then, the type determining unit 24 performs an input calculation operation for a number of times equal to the number of applications (Step S113). Subsequently, with the average response time, the average communication count of the server, the average communication volume of the server, the average communication volume of the client device, and the average communication count of the client device serving as the input; the type determining unit 24 builds a learning machine meant for outputting the type of the application (Step S114).

In this way, as a result of determining the type of the application using machine learning, the type determining unit 24 can perform type determination of even such an application whose type is not determinable from the port number.

Given below is the explanation of the flow of a normalization operation performed using the ex-Gaussian distribution. FIG. 27 is a flowchart for explaining the flow of a normalization operation performed using the ex-Gaussian distribution.

As illustrated in FIG. 27, the normalizing unit 28 determines whether or not the timing is meant for calculating the representative response time (Step S121). If the timing is not meant for calculating the representative response time, then the normalizing unit 28 determines whether or not the latest representative response time is available (Step S122). If the latest representative response time is available, then the normalizing unit 28 sets (the average response time)/(the latest representative response time) as the normalized average response time (Step S123).

Meanwhile, if the timing is meant for calculating the representative response time, then the normalizing unit 28 removes the outliers among the average response times (Step S124). If the outliers among the average response times are not to be removed, then the normalizing unit 28 does not perform the operation at Step S124.

Subsequently, the normalizing unit 28 fits the distribution of average response times, from which the outliers have been removed, in the ex-Gaussian distribution (Step S125). Then, the normalizing unit 28 performs the one-sample Kolmogorov-Smirnov test for which the distribution of average response times and the distribution curve of the fitting result serve as the input (Step S126).

Subsequently, the normalizing unit 28 determines whether or not the result of the test is significant (Step S127). If the result of the test is significant, then the normalizing unit 28 sets the parameter µ of the parameters of the ex-Gaussian distribution as the representative response time (Step S128), and the system control proceeds to Step S123. On the other hand, if the result of the test is not significant, then the normalizing unit 28 ends the operations without performing normalization.

In this way, the normalizing unit 28 can obtain the representative response time by fitting the distribution of average response times in the ex-Gaussian distribution.

As described above, in the embodiment, from among the communication packets captured by the capturing unit 21, the communication packets of the applications for which the response time holds importance from the performance perspective are used by the response time calculating unit 26 to calculate the response time on an application-by-application basis. Then, the normalizing unit 28 calculates the average response time and normalizes the average response time using the representative response time to calculate the normalized response time on an application-by-application basis. Subsequently, the performance decrease determining unit 31 uses the normalized response time and determines whether or not the performance of the concerned application has decreased. Regarding an application that has undergone a decrease in the performance, the diagnosing unit 33 determines whether or not the decrease is attributable to the application or attributable to the infrastructure of cloud computing. With that, the performance status diagnosing device 2 becomes able to identify whether the decrease in the performance of an application is attributable to the infrastructure of cloud computing or attributable to the application.

Moreover, in the embodiment, in the case in which whether or not an application is of the type in which the response time holds importance from the performance perspective cannot be determined from the port number, the type determining unit 24 determines the same using machine learning. Hence, the type of the application can be reliably determined.

Furthermore, in the embodiment, the normalizing unit 28 calculates the representative response time by fitting the distribution of average response times in the ex-Gaussian distribution. Hence, the representative response time can be accurately calculated.

Furthermore, in the embodiment, since the normalizing unit 28 fits the post-outlier-removal distribution of average response times in the ex-Gaussian distribution, it becomes possible to enhance the possibility of achieving a fit in the ex-Gaussian distribution.

Moreover, in the embodiment, the visualizing unit 35 calculates colors according to the normalized average response times, and the display control unit 37 displays the normalized average response times using the respective colors on the display device 6. As a result, the operations manager 5 becomes able to check the number of virtual machines 3a in which the performance is lagging and check the tendency of occurrence of the lag.

Furthermore, in the embodiment, the visualizing unit 35 calculates the contrasting density of the colors according to the request count, and the display control unit 37 displays the normalized average response times using the respective colors and the respective contrasting densities on the display device 6. As a result, in the performance status diagnosing device 2, the performance status of the applications having a high request frequency and having a significant impact can be displayed in a prominent manner.

Moreover, in the embodiment, regarding whether or not the performance of an application has decreased, the performance decrease determining unit 31 performs determination by further using the request count with respect to the concerned application. Hence, a decrease in the performance of the application can be accurately determined.

Meanwhile, in the embodiment, the explanation is given about the performance status diagnosing device 2. The configuration of the performance status diagnosing device 2 can be implemented using software, so that a performance status diagnosing program having identical functions can be obtained. Given below is the explanation of a computer that executes the performance status diagnosing program.

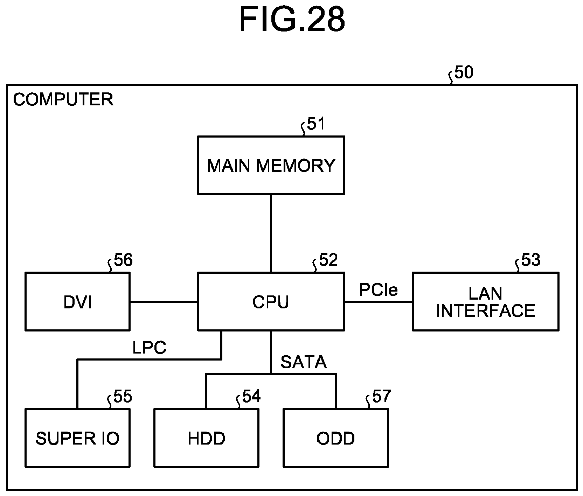

FIG. 28 is a diagram illustrating a configuration of the computer that executes the performance status diagnosing program according to the embodiment. As illustrated in FIG. 28, a computer 50 includes a main memory 51, a central processing unit (CPU) 52, a local area network (LAN) interface 53, and a hard disk drive (HDD) 54. Moreover, the computer 50 includes a super input-output (10) 55, a digital visual interface (DVI) 56, and an optical disk drive (ODD) 57.

The main memory 51 is a memory for storing computer programs or the intermediate execution results of computer programs. The CPU 52 is a central processing device that reads computer programs from the main memory 51 and executes them. The CPU 52 includes a chipset having a memory controller.

The LAN interface 53 is an interface for connecting the computer 50 to other computers via a LAN. The HDD 54 is a disk device for storing computer programs and data. The super 10 55 is an interface for connecting an input device such as a mouse or a keyboard. The DVI 56 is an interface for connecting a liquid display device. The ODD 57 is a device for performing reading and writing with respect to digital versatile discs (DVDs).

The LAN interface 53 is connected to the CPU 52 using the PCI express (PCIe). The HDD 54 and the ODD 57 are connected to the CPU 52 using the serial advanced technology attachment (SATA). The super 10 55 is connected to the CPU 52 using the low pin count (LPC).

The performance status diagnosing program to be executed in the computer 50 is stored in a DVD; and is read by the ODD 57 from the DVD and installed in the computer 50. Alternatively, the performance status diagnosing program is stored in a database of another computer that is connected via the LAN interface 53; and is read from that database and installed in the computer 50. Then, the installed performance status diagnosing program is stored in the HDD 54; read into the main memory 51; and executed by the CPU 52.

Meanwhile, in the embodiment, although the explanation is given about the case of diagnosing the performance status of the cloud system 1, the present invention is not limited to that case and can be implemented in an identical manner in the case of diagnosing the performance status of any arbitrary system.

According to an aspect of the invention, it becomes possible to identify whether the decrease in the performance of an application is attributable to the infrastructure of cloud computing or attributable to the application.

## Claims

1. A system status visualization program for causing a computer to execute a process comprising:
storing that, for each of a plurality of applications executed in a system, includes obtaining data passing through a predetermined point of the system and storing the data;
calculating, on an application-by-application basis, average response time in each predetermined time window using the stored data;
calculating normalized response time on an application-by-application basis by normalizing the calculated average response time; and
outputting that includes determining status of the system according to magnitude of the normalized response time that is calculated, and outputting the status.

2. The system status visualization program according to claim 1 causing the computer to execute the process further comprising determining, using machine learning, whether or not an application is target application for calculating the average response time, wherein
calculating the average response time includes calculating the average response time for an application determined at the determining to be target application for calculating the average response time.

3. The system status visualization program according to claim 1 or 2, wherein calculating the normalized response time includes calculating the normalized response time using ex-Gaussian distribution.

4. The system status visualization program according to claim 3, wherein calculating the normalized response time includes calculating the normalized response time using ex-Gaussian distribution with respect to data from which outlier is removed.

5. The system status visualization program according to any one of claims 1 to 4, wherein the outputting includes displaying, using color according to magnitude of the normalized response time, the normalized response time in a corresponding manner to timing after the each predetermined time window on a display device.

6. The system status visualization program according to claim 5, wherein the outputting includes displaying, using contrasting density according to request count with respect to an application after the each predetermined time window, the normalized response time in a corresponding manner to timing after the each predetermined time window on a display device.

7. The system status visualization program according to any one of claims 1 to 6, wherein determining status of the system includes determining, when there is a decrease in performance of an application, whether the decrease in performance is attributable to the system or attributable to the application.

8. The system status visualization program according to claim 7, wherein determining status of the system includes determining, based on the normalized response time of an application and based on request count with respect to the application after the each predetermined time window, whether or not there is a decrease in performance of the application.

9. A system status visualization method that, when executed by a computer, causes the computer to execute a process comprising:
storing that, for each of a plurality of applications executed in a system, includes obtaining data passing through a predetermined point of the system and storing the data;
calculating, on an application-by-application basis, average response time in each predetermined time window using the stored data;
calculating normalized response time on an application-by-application basis by normalizing the calculated average response time; and
outputting that includes determining status of the system according to magnitude of the normalized response time that is calculated, and outputting the status.

10. A system status visualization device (2) comprising:
a storing unit (21) that, for each of a plurality of applications executed in a system (1), obtains data passing through a predetermined point of the system (1) and stores the data;
a first calculating unit (28) that calculates, on an application-by-application basis, average response time in each predetermined time window using the stored data;
a second calculating unit (28) that calculates normalized response time on an application-by-application basis by normalizing the calculated average response time; and
an output unit (31, 33, 35, 37) that determines status of the system (1) according to magnitude of the normalized response time that is calculated, and outputs the status.
